# EUROPÄISCHE PATENTANMELDUNG

(11) **EP 3 406 814 A1**
(43) Veröffentlichungstag der Anmeldung: **28.11.2018**
(21) Anmeldenummer: 18169599.0
(22) Anmeldetag: 26.04.2018
(51) Int. Cl.: E04C 1/39, F24D 3/14, E04C 2/52, E04C 2/288

(54) **PLATTENFÖRMIGES FERTIGBAUTEIL**

(30) Priorität: 26.05.2017 DE 202017103204 U
(71) Anmelder: Schlüter, Werner, 58644 Iserlohn (DE)
(72) Erfinder: Schlüter, Werner, 58644 Iserlohn (DE)
(74) Vertreter: Schröter & Albrecht

(57) **Zusammenfassung**

Plattenförmiges Fertigbauteil (1) mit zumindest einer ersten selbsttragenden Beton- oder Mörtelschicht (2), wobei mit der Oberseite der ersten Beton- oder Mörtelschicht (2) eine Heizleiteraufnahmeplatte (3) aus Kunststoff formschlüssig verbunden ist, die mit einer regelmäßigen Strukturierung versehen ist und eine im Wesentlichen einheitliche Materialstärke aufweist, wobei die Strukturierung aufwärts weisende, mit Hinterschneidungen (4) versehene Haltevorsprünge (5) umfasst, die zur klemmenden Aufnahme von Heizleitern (6) ausgelegt sind.

## Beschreibung

Die vorliegende Erfindung betrifft ein plattenförmiges Fertigbauteil mit zumindest einer ersten selbsttragenden Beton- oder Mörtelschicht.

Derartige Fertigbauteile sind im Stand der Technik bereits bekannt. Sie werden bei der Errichtung von Gebäuden zur Herstellung von Böden, Wänden und Decken eingesetzt. Hierzu müssen sie derart ausgelegt sein, dass sie die erforderliche statische Tragfähigkeit von Gebäuderohbaukörpern aufweisen. Die Verwendung solcher Fertigbauteile ist dahingehend von Vorteil, dass bei der Gebäudeerrichtung vor Ort Zeit eingespart werden kann, was häufig wünschenswert ist.

Auf der Baustelle müssen zur Herstellung einer Boden-, Wand- oder Deckenkonstruktion trotz solcher Fertigbauteile eine Vielzahl weiterer Arbeitsschritte durchgeführt werden. Im Falle einer Bodenkonstruktion, in die eine Fußbodenheizung integriert werden soll, werden auf den durch die Fertigbauteile gebildeten Untergrund beispielsweise in einem ersten Schritt Dämmplatten verlegt. In einem weiteren Schritt werden auf den Dämmplatten Heizleiteraufnahmeplatten aus Kunststoff angeordnet, wie sie beispielsweise von der Schlüter-Systems KG unter der Produktbezeichnung "Schlüter-BEKOTEC EN 23FD Systemplatte" vertrieben werden. Derartige Heizleiteraufnahmeplatten sind mit einer regelmäßigen Strukturierung versehen und weisen eine im Wesentlichen einheitliche Materialstärke auf, wobei die Strukturierung aufwärts weisende, mit Hinterschneidungen versehene Haltevorsprünge umfasst, die zur klemmenden Aufnahme von Heizleitungen ausgelegt sind. In einem sich anschließenden Schritt können dann Heizleiter meist mäanderförmig auf den Heizleiteraufnahmeplatten zwischen den Haltevorsprüngen verlegt und an ein Fußbodenheizungssystem angeschlossen werden. Daraufhin wird auf den Heizleiteraufnahmeplatten eine Estrichschicht eingebracht, welche die Heizleiter und die Heizleiteraufnahmeplatte in einer vorbestimmten Materialstärke vollständig bedeckt. Auf der Estrichschicht kann nach dem Aushärten dann ein Bodenbelag verlegt werden. Besteht der Bodenbelag beispielsweise aus Fliesen, so kann zwischen der Estrichschicht und den Fliesen optional eine Entkopplungsmatte befestigt werden, insbesondere unter Verwendung eines Dünnbettmörtels. Eine solche Entkopplungsmatte dient dazu, Bewegungen zwischen der Estrichschicht und dem Bodenbelag zu kompensieren, um eine Beschädigung des Bodenbelags zu verhindern. Als Beispiel einer solchen Entkopplungsmatte sei vorliegend die von der Schlüter-Systems KG unter dem Produktnamen "Schlüter-DITRA 25" vertriebene Entkopplungsmatte genannt. Derartige Bodenkonstruktionen sind allerdings nur begrenzt belastbar und für Gewerbegebäude ungeeignet, in denen beispielsweise auf Paletten angeordnete Ware mit Flurförderfahrzeugen transportiert wird.

Bei der Herstellung einer Wandkonstruktion mit integrierter Wandheizung sind die Arbeitsschritte sehr ähnlich, wobei die Dämmschicht und auch die Heizleiteraufnahmeplatten fest mit der Beton- oder Mörtelschicht verbunden werden müssen. Dies erfolgt normalerweise über Dübel- und/oder Klebeverbindungen. Darüber hinaus wird anstelle einer Estrichschicht normalerweise ein Putzmörtel auf die Oberseite der Heizleiteraufnahmeplatte angeordnet.

Bei der Herstellung einer Deckenkonstruktion wird auf die selbsttragende Beton- oder Mörtelschicht meist lediglich ein Putzmörtel aufgetragen. Soll die Deckenkonstruktion mit einer Deckenheizung versehen werden, so wird die Deckenheizung normalerweise in eine abgehängte Deckenverkleidung integriert.

Ausgehend von diesem Stand der Technik ist es eine Aufgabe der vorliegenden Erfindung, den für die Erstellung eines Gebäudes erforderlichen Zeitaufwand vor Ort weiter zu reduzieren und den Anwendungsbereich der Fertigbauteile zu erweitern.

Die vorliegende Erfindung schafft ein plattenförmiges Fertigbauteil mit zumindest einer ersten selbsttragenden Beton- oder Mörtelschicht der eingangs genannten Art, die eine statische Tragfähigkeit zur Verwendung als Rohbaukörper in Gebäuden aufweist. Diese statische Tragfähigkeit kann durch die Zusammensetzung des Betons oder Mörtels, durch Hinzugabe von Zuschlagstoffen, durch das Integrieren eines oder mehrerer metallischer Bewehrungsgitter etc. in bekannter Weise realisiert werden. Zur Lösung der genannten Aufgabe ist das Fertigbauteil erfindungsgemäß dadurch gekennzeichnet, dass mit der Oberseite der ersten Beton- oder Mörtelschicht eine Heizleiteraufnahmeplatte aus Kunststoff formschlüssig verbunden ist, die mit einer regelmäßigen Strukturierung versehen ist und eine im Wesentlichen einheitliche Materialstärke aufweist, wobei die Strukturierung aufwärts weisende, mit Hinterschneidungen versehene Haltevorsprünge umfasst, die zur klemmenden Aufnahme von Heizleitern ausgelegt sind. Mit anderen Worten schlägt die vorliegende Erfindung vor, ein plattenförmiges Fertigbauteil bereitzustellen, in das die Heizleiteraufnahmeplatte bereits integriert ist. Die formschlüssige Verbindung zwischen der Heizleiteraufnahmeplatte und der Beton- oder Mörtelschicht wird dabei vorteilhaft hergestellt, indem die Heizleiteraufnahmeplatte in die zur Herstellung der Beton- oder Mörtelschicht verwendeten Gussform mit ihren Haltevorsprüngen zur Gussform weisend eingelegt und dann der Beton oder Mörtel in die Gussform gefüllt wird. Der Beton oder Mörtel verkrallt sich dann an den Rückseiten der Haltevorsprünge, die ebenfalls Hinterschneidungen aufweisen, wodurch ein fester formschlüssiger Verbund zwischen der Beton- oder Mörtelschicht und der Heizleiteraufnahmeplatte erzielt wird. Ein wesentlicher Vorteil eines solchen erfindungsgemäßen Fertigbauteils besteht darin, dass bei der Montage vor Ort einer Boden-, Wand- oder Deckenkonstruktion mit integrierter Flächenheizung zumindest ein Montageschritt entfällt, nämlich das Anordnen und gegebenenfalls das Befestigen der Heizleiteraufnahmeplatte auf der Beton- oder Mörtelschicht. Entsprechend kann bei der Erstellung eines Gebäudes Zeit eingespart werden. Aufgrund des formschlüssigen Verbunds zwischen der Beton- und Mörtelschicht und der Heizleiteraufnahmeplatte weist das erfindungsgemäße Fertigbauteil ferner eine sehr hohe Tragfähigkeit auf, so dass es auch für die Herstellung stark belasteter Bodenkonstruktion geeignet ist. Die Fläche des Fertigbauteils beträgt bevorzugt zumindest 1m x 2,4m, so dass es als Rohbaukörper zur Errichtung eines Gebäudes eingesetzt ewrden kann. Die Rohdichte der Beton- oder Mörtelschicht beträgt bevorzugt mindestens 1800 kg/m³, besser noch mindestens 2300 kg/m³, um eine für den Einsatz in Gebäuden geeignete statische Tragfähigkeit zu erzielen. Eine Bewehrung in Form eines metallischen Bewehrungsgitters kann innerhalb der Beton- oder Mörtelschicht vorgesehen sein, was ebenfalls der Erzielung einer geeigneten statischen Tragfähigkeit zuträglich ist. Alternativ oder zusätzlich kann auch eine metallische Bewehrung vorgesehen sein, die innerhalb der Beton- oder Mörtelschicht angeordnet und auswärts in der der Heizleiteraufnahmeplatte abgewandten Richtung aus der Beton- oder Mörtelschicht herausragt. Diese Variante bietet sich insbesondere an, wenn das Fertigbauteil als Deckenelement mit integrierter Flächenheizung eingesetzt wird und auf dem Fertigteil nach dessen Montage vor Ort eine weitere zu bewehrende Schicht aufgetragen werden soll.

Gemäß einer ersten Variante der vorliegenden Erfindung sind die Haltevorsprünge in einem Abstand zueinander angeordnet, der zur Aufnahme von Heizleitern in Form von Rohren und/oder Schläuchen mit einem Außendurchmesser im Bereich von 10 bis 25 mm ausgelegt ist, wobei die Seitenwände der Haltevorsprünge vorteilhaft kreisbogenförmige Rundungen aufweisen, um die Rohre und/oder Schläuche zumindest teilweise formschlüssig zu fixieren.

Gemäß einer zweiten Variante der vorliegenden Erfindung sind die Haltevorsprünge in einem Abstand zueinander angeordnet, der zur Aufnahme von Heizleitern in Form von Heizkabeln mit einem Außendurchmesser im Bereich von 4 bis 10 mm ausgelegt ist, wobei die Seitenwände der Vorsprünge vorteilhaft kreisbogenförmige Rundungen aufweisen. Bei dieser Variante ist das Fertigbauteil allein zur Aufnahme von Heizkabeln geeignet.

Gemäß einer Ausgestaltung der vorliegenden Erfindung weist das Fertigbauteil eine zweite selbsttragende Beton- oder Mörtelschicht und eine Dämmschicht auf, wobei die Dämmschicht zwischen der ersten Beton- oder Mörtelschicht und der zweiten Beton- oder Mörtelschicht angeordnet ist. Eine solche Sandwichbauweise zeichnet sich neben der zusätzlichen Dämmung auch durch eine sehr gute Tragfähigkeit aus. So können Fertigbauteile, die für Boden- oder Wandkonstruktionen eingesetzt werden sollen, in sehr großen Formaten zur Verfügung gestellt werden, insbesondere mit Flächen bis zu 4m Breite und 8m Länge, bei Sonderkonstruktionen auch noch länger.

Vorteilhaft ist stirnseitig zumindest eine Ausnehmung vorgesehen, insbesondere in Form einer Nut, besser noch in Form einer umlaufenden Nut. In derartigen Ausnehmungen kann sich bei der Montage in die Spalte zwischen benachbarten Fertigbauteilen eingebrachtes aushärtendes Material verankern. Bei dem aushärtenden Material kann es sich beispielsweise um Fugenmörtel handeln. Ebenso kann ein im ausgehärteten Zustand elastisches Material verwendet werden, wie beispielsweise Silikon oder dergleichen, um eine Dehnungsfuge auszubilden.

Gemäß einer Ausgestaltung der vorliegenden Erfindung ist an der Oberseite der Heizleiteraufnahmeplatte zumindest ein Heizleiter aufgenommen, der Anschlüsse aufweist, die von einer oder mehreren Stirnseiten des Fertigbauteils aus zugänglich sind, und an der Oberseite ist eine den zumindest einen Heizleiter bedeckende Abdeckschicht in Form einer Estrichschicht, Putzmörtelschicht oder von Bauplatten, insbesondere Gipskartonplatten vorgesehen. Letztere können beispielsweise unter Einsatz von Mörtelbatzen in einem vorbestimmten Abstand zur Oberseite der Heizleiteraufnahmeplatte angeordnet sein. Mit anderen Worten zeichnet sich diese Ausgestaltung dadurch aus, dass neben der Heizleiteraufnahmeplatte auch die Heizleiter und die diese abdeckende Abdeckschicht in das Fertigbauteil integriert sind, wodurch weitere Arbeitsschritte auf der Baustelle eingespart werden können. Im Falle einer Estrichschicht oder Putzmörtelschicht als Abdeckschicht wird mit der Heizleiterplatte ein formschlüssiger Verbund erzielt, der besonderes bei Bodenkonstruktionen eine hohe Belastbarkeit ermöglicht.

An der Abdeckschicht oder der Bauplatte kann erfindungsgemäß ferner bereits eine Entkopplungsmatte befestigt sein, insbesondere unter Verwendung eines Dünnbettmörtels, so dass auch diese vor Ort nicht montiert werden muss, wobei die Entkopplungsmatte auch als Abdichtung dienen kann.

Ferner schafft die vorliegende Erfindung zur Lösung der eingangs genannten Aufgabe ein Verfahren zum Herstellen einer Bodenkonstruktion unter Verwendung von erfindungsgemäßen Fertigbauteilen, das die Schritte aufweist: a) Anordnen der Fertigbauteile auf einem bodenseitigen Untergrund derart, dass diese auf von dem Untergrund vorstehenden Fundamentstreifen ruhen, wobei zwischen den Fundamentstreifen vorhandene Hohlräume aufgefüllt werden können, insbesondere mit einem Schüttmaterial, b) Ausfüllen der zwischen den Fertigbauteilen vorhandenen Fugen mit einem geeigneten Füllmaterial und c) Verlegen eines Bodenbelags auf der Oberseite der Fertigbauteile.

Bevorzugt werden zwischen den Schritten b) und c) Heizleiter auf der Heizleiteraufnahmeplatte verlegt, auf der Heizleiteraufnahmeplatte eine die Heizleiter bedeckende Estrichschicht angeordnet und optional auf der Estrichschicht eine Entkopplungsmatte befestigt, insbesondere unter Verwendung eines Dünnbettmörtels.

Darüber hinaus schafft die vorliegende Erfindung zur Lösung der eingangs genannten Aufgabe ein Verfahren zum Herstellen einer Wandkonstruktion eines Gebäudes unter Verwendung von erfindungsgemäßen Fertigbauteilen, das die Schritte aufweist: a) Anordnen der Stirnseiten der Fertigbauteile auf einem bodenseitigen Untergrund derart, dass diese insbesondere auf von dem Untergrund vorstehenden Fundamentstreifen ruhen und dass die Oberseiten der jeweiligen Heizleiteraufnahmeplatten zum Innern eines Raumes des Gebäudes weisen, b) Ausfüllen der zwischen den Fertigbauteilen vorhandenen Fugen mit einem geeigneten Füllmaterial und c) Anordnen einer Wandverkleidung auf den Fertigbauteilen.

Vorteilhaft werden zwischen den Schritten b) und c) Heizleiter auf der Heizleiteraufnahmeplatte verlegt, auf der Heizleiteraufnahmeplatte eine die Heizleiter bedeckende Abdeckschicht in Form von Putzmörtel oder von Bauplatten, insbesondere Gipskartonplatten angeordnet und optional auf der Abdeckschicht eine Entkopplungsmatte befestigt, insbesondere unter Verwendung eines Dünnbettmörtels.

Auch wenn bislang stets von Heizleitern, einer Heizleiteraufnahmeplatte und einer Flächenheizung die Rede war, bezieht sich die Erfindung auch auf den Fall, dass durch einen fluidführenden Heizleiter ein Kühlmedium geleitet wird, um eine Flächenkühlung zu realisieren. Die Begriffe Heizleiter, Heizleiteraunfahmeplatte und Flächenheizung sind in diesem Sinne entsprechend weit auszulegen.

Zudem schafft die vorliegende Erfindung zur Lösung der eingangs genannten Aufgabe ein Verfahren zum Herstellen einer Deckenkonstruktion eines Gebäudes unter Verwendung von erfindungsgemäßen Fertigbauteilen, das die Schritte aufweist: a) Anordnen der Fertigbauteile derart, dass diese zum Innern eines Raumes des Gebäudes weisen, b) Ausfüllen der zwischen den Fertigbauteilen vorhandenen Fugen mit einem geeigneten Füllmaterial und c) Anordnen einer Deckenverkleidung auf den Fertigbauteilen.

Bevorzugt werden zwischen den Schritten b) und c) Heizleiter auf der Heizleiterplatte verlegt, auf der Heizleiterplatte eine die Heizleiter bedeckende Abdeckschicht in Form von Putzmörtel oder von Bauplatten, insbesondere Gipskartonplatten angeordnet und optional auf der Abdeckschicht eine Entkopplungsmatte befestigt, insbesondere unter Verwendung eines Dünnbettmörtels.

Weitere Merkmale und Vorteile der vorliegenden Erfindung werden anhand der nachfolgenden Beschreibung von Fertigbauteilen und Verfahren gemäß verschiedener Ausführungsformen der vorliegenden Erfindung unter Bezugnahme auf die beiliegende Zeichnung deutlich. Darin ist
Figur 1 eine schematische Teilschnittansicht eines Fertigbauteils gemäß einer ersten Ausführungsform der vorliegenden Erfindung;
Figur 2 eine schematische Teilschnittansicht eines Fertigbauteils gemäß einer zweiten Ausführungsform der vorliegenden Erfindung;
Figur 3 eine schematische Teilschnittansicht eines Fertigbauteils gemäß einer dritten Ausführungsform der vorliegenden Erfindung;
Figur 4 eine schematische Teilschnittansicht eines Fertigbauteils gemäß einer vierten Ausführungsform der vorliegenden Erfindung;
Figur 5 eine schematische Teilschnittansicht eines Fertigbauteils gemäß einer fünften Ausführungsform der vorliegenden Erfindung;
Figur 6 eine schematische Teilschnittansicht eines Fertigbauteils gemäß einer sechsten Ausführungsform der vorliegenden Erfindung;
Figur 7 eine schematische Teilschnittansicht eines Bodenaufbaus, der unter Verwendung von in Figur 2 dargestellten Fertigbauteilen erstellt wurde;
Figur 8 eine schematische Teilschnittansicht eines Wandaufbaus, der unter Verwendung von in Figur 2 dargestellten Fertigbauteilen erstellt wurde; und
Figur 9 eine schematische Teilschnittansicht eines Fertigbauteils gemäß einer siebten Ausführungsform der vorliegenden Erfindung.

Gleiche Bezugsziffern beziehen sich nachfolgend auf gleiche oder gleichartige Bauteile.

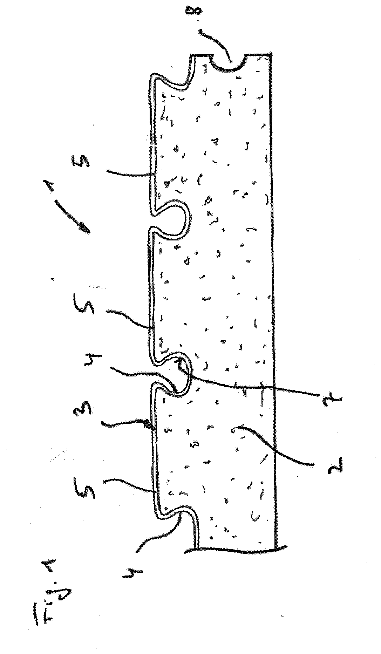

Figur 1 zeigt ein plattenförmiges Fertigbauteil 1 gemäß einer Ausführungsform der vorliegenden Erfindung, das beispielsweise seitliche Abmessungen von 3m x 5 m aufweisen und als statisch tragendes Bauelement zur Errichtung von Gebäuden eingesetzt werden kann, insbesondere bei der Herstellung von Boden-, Wand- und Deckenkonstruktionen. Das Fertigbauteil 1 umfasst eine selbsttragende Beton- oder Mörtelschicht 2 mit einer Stärke im Bereich von 5cm bis 20cm, die in bekannter Weise durch eine nicht dargestellte, innerhalb der Beton- oder Mörtelschicht 2 angoerdnete Bewehrung verstärkt sein kann, wie beispielsweise durch eine aus Metall- oder Kunststofffasern oder aus Metallstäben hergestellte Bewehrung. Die Rohdichte der Beton- oder Mörtelschicht 2 beträgt bevorzugt mindestens 1800 kg/m³, besser noch mindestens 2300 kg/m³. Die Beton- oder Mörtelschicht 2 kann geeignete Zuschlagstoffe aufweisen. Mit der Oberseite der Beton- oder Mörtelschicht 2 ist eine aus Kunststoff hergestellte Heizleiteraufnahmeplatte 3 formschlüssig verbunden. Die Heizleiteraufnahmeplatte ist mit einer regelmäßigen Strukturierung versehen und weist eine im Wesentlichen einheitliche Materialstärke auf. Die Strukturierung definiert aufwärts weisende, mit Hinterschneidungen 4 versehene Haltevorsprünge 5, die jeweils in einem Abstand zueinander angeordnet sind, der zur Aufnahme von Heizleitern 6 in Form von Rohren und/oder Schläuchen mit einem Außendurchmesser im Bereich von 10 bis 25 mm ausgelegt ist. Vorliegend weisen die Seitenwände 7 der Haltevorsprünge 5 kreisbogenförmige Rundungen auf, die an den Außendurchmesser der aufzunehmenden Heizleiter 6 angepasst sind, so dass letztere zumindest teilweise formschlüssig zwischen den Haltevorsprüngen 5 aufgenommen werden können. Stirnseitig ist an dem Fertigbauteil 1, vorliegend im Bereich der Beton- oder Mörtelschicht 2 eine Ausnehmung 8 vorgesehen, bevorzugt in Form einer umlaufenden Nut.

Das Fertigbauteil 1 kann beispielsweise hergestellt werden, indem in einem ersten Schritt die Heizleiteraufnahmeplatte 3 in eine Gussform mit ihren Haltevorsprüngen 5 zu deren Wandung weisend eingelegt und in einem zweiten Schritt Beton oder Mörtel in die Gussform in pastöser oder flüssiger Form eingebracht wird. Der Beton oder Mörtel füllt rückseitig die Haltevorsprünge 5 und deren Hinterschneidungen 4, so dass nach dem Aushärten des Betons oder Mörtels die Heizleiteraufnahmeplatte 3 formschlüssig mit der Beton- oder Mörtelschicht 2 verbunden ist. Soll das Fertigbauteil 1 mit einer Bewehrung versehen werden, so ist diese ebenfalls vor dem Einbringen des Betons oder Mörtels in der Gussform zu positionieren.

An dieser Stelle sei darauf hingewiesen, dass die Haltevorsprünge 5 alternativ auch jeweils in einem Abstand zueinander angeordnet und dazu ausgelegt sein können, Heizleiter 6 in Form von Heizkabeln mit einem Außendurchmesser im Bereich von 4 bis 10 mm aufzunehmen.

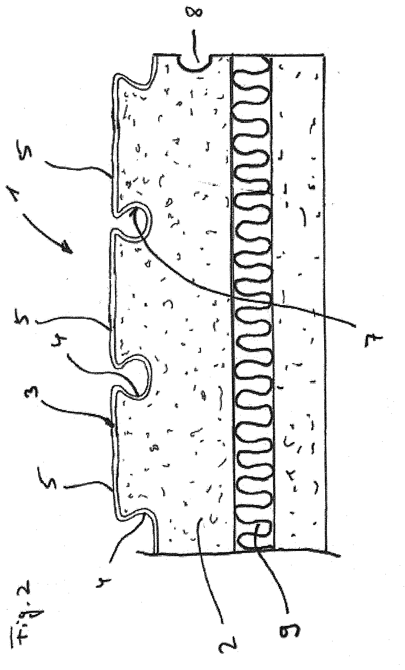

Figur 2 zeigt ein Fertigbauteil 1 gemäß einer zweiten Ausführungsform der vorliegenden Erfindung, das sich dahingehend von dem in Figur 1 dargestellten Fertigbauteil 1 unterscheidet, dass es eine zweite selbsttragende Beton- oder Mörtelschicht 2 und eine Dämmschicht 9 aufweist, wobei die Dämmschicht 9 zwischen der ersten Beton- oder Mörtelschicht und der zweiten Beton- oder Mörtelschicht angeordnet ist. Vorliegend sind die zwei Beton- oder Mörtelschichten 2 mit die Dämmschicht 9 durchdringenden, vorliegend nicht näher dargestellten Edelstahlankern verbunden, um eine hohe Tragfähigkeit zu erzielen. Bei der Dämmschicht 9 kann es sich um eine solche mit einem tragfähigen geschäumten Kunststoffkern handeln, der beidseitig mit einer Haftvermittlerschicht aus Vlies, Gewebe, Kontaktmörtel oder dergleichen versehen ist, in die sich der bei der Herstellung des Fertigbauteils 1 verwendete Beton oder Mörtel verkrallt.

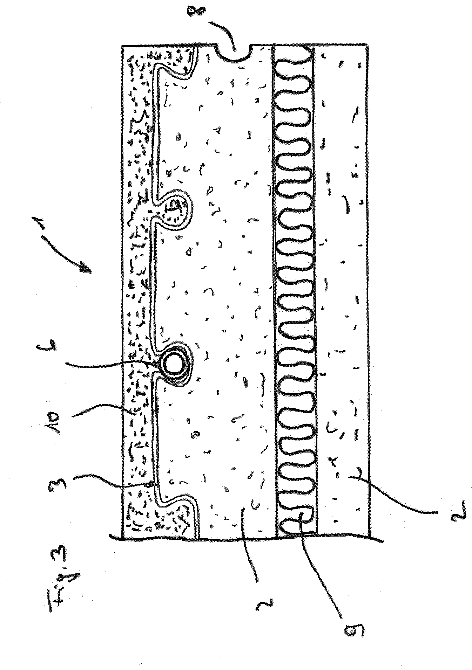

Figur 3 zeigt ein Fertigbauteil 1 gemäß einer dritten Ausführungsform der vorliegenden Erfindung, das sich dahingehend von dem in Figur 2 dargestellten Fertigbauteil 1 unterscheidet, dass an der Oberseite der Heizleiteraufnahmeplatte 3 Heizleiter 6 aufgenommen sind, deren nicht näher dargestellten Anschlüsse von einer oder mehreren Stirnseiten des Fertigbauteils 1 aus zugänglich sind. Ferner ist an Oberseite eine die Heizleiter 6 bedeckende Abdeckschicht 10 in Form einer Estrichschicht oder Putzmörtelschicht vorgesehen, die formschlüssig mit der Heizleiteraufnahmeplatte 3 verbunden ist und sich in den Hinterschneidungen 4 verklammert.

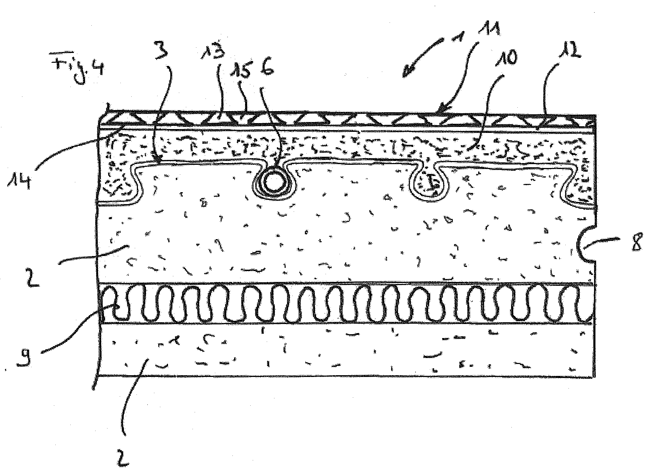

Figur 4 zeigt ein Fertigbauteil 1 gemäß einer vierten Ausführungsform der vorliegenden Erfindung, das sich dahingehend von dem in Figur 3 dargestellten Fertigbauteil 1 unterscheidet, dass an der Abdeckschicht 10 eine Entkopplungsmatte 11 befestigt ist, vorliegend unter Verwendung eines Dünnbettmörtels 12. Die Entkopplungsmatte 11 ist aus folienartigen Kunststoff hergestellt, kann entsprechend auch als Abdichtung dienen und umfasst eine Strukturierung, die eine Vielzahl von sich von der Oberseite abwärts erstreckende, mit Hinterschneidungen versehene Vertiefungen 13 aufweist, die vorliegend pyramiden- oder kegelstumpfförmig ausgebildet sind. An ihrer Unterseite ist die Entkopplungsmatte mit einem Vlies 14 kaschiert, das einen Haftgrund für den Dünnbettmörtel 12 bildet, diesen aber nicht zu den zwischen den Vertiefungen 13 ausgebildeten Hohlräumen 15 durchdringen lässt. Sofern es nicht auf eine Entkopplung sondern nur auf eine Abdichtung ankommt, kann auch eine vorliegend nicht näher dargestellte ebene Kunststofffolie verwendet werden, die beidseitig mit einem Vlies oder Gewebe als Haftvermittler für Dünnbettmörtel versehen ist.

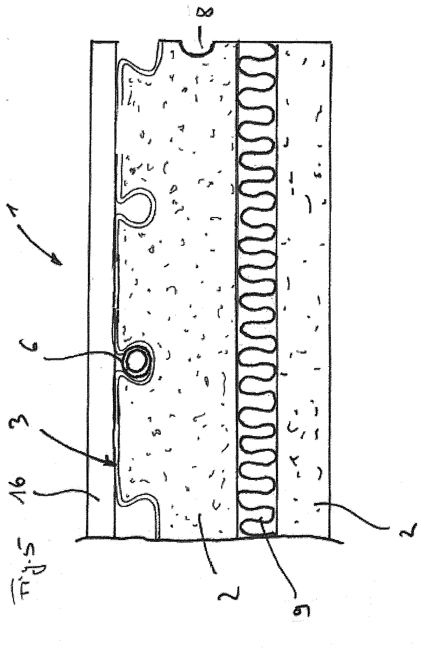

Figur 5 zeigt ein Fertigbauteil 1 gemäß einer fünften Ausführungsform der vorliegenden Erfindung, das sich dahingehend von dem in Figur 3 dargestellten Fertigbauteil 1 unterscheidet, dass anstelle der Abdeckschicht 10 eine Bauplatte 16 an der Oberseite der Heizleiteraufnahmeplatte 3 befestigt ist, vorliegend unter Verwendung nicht näher dargestellter Dübel und Schrauben. Bei der Bauplatte 16 kann es sich beispielsweise um eine Gipskartonplatte handeln, um nur ein Beispiel zu nennen. Auch auf der Bauplatte 16 kann grundsätzlich eine Entkopplungsmatte 11 in der zuvor beschriebenen Weise befestigt werden, auch wenn dies vorliegend nicht dargestellt ist.

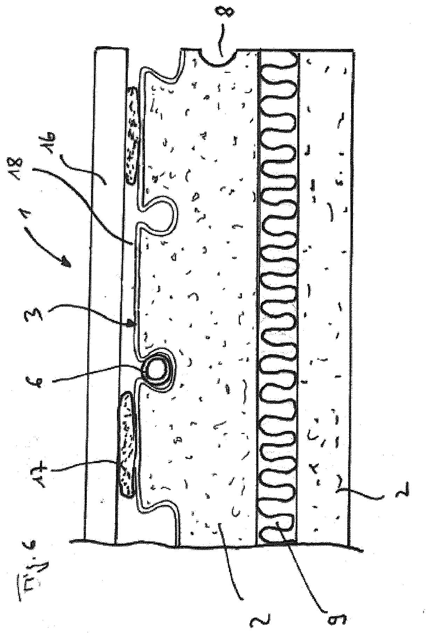

Figur 6 zeigt ein Fertigbauteil 1 gemäß einer sechsten Ausführungsform der vorliegenden Erfindung, das sich dahingehend von dem in Figur 5 dargestellten Fertigbauteil 1 unterscheidet, dass die Bauplatte 16 alternativ oder zusätzlich zu Dübeln und Schrauben unter Verwendung von Mörtelbatzen 17 an der Oberseite der Heizleiteraufnahmeplatte 3 befestigt ist, wodurch zwischen diesen Komponenten ein zusätzlicher Zwischenraum in Form eines Luftraums 18 ausgebildet ist. Die Luftmenge in diesem Luftraum 18 kann von den Heizleitern 6 sehr effektiv auf eine gewünschte Temperatur gebracht werden.

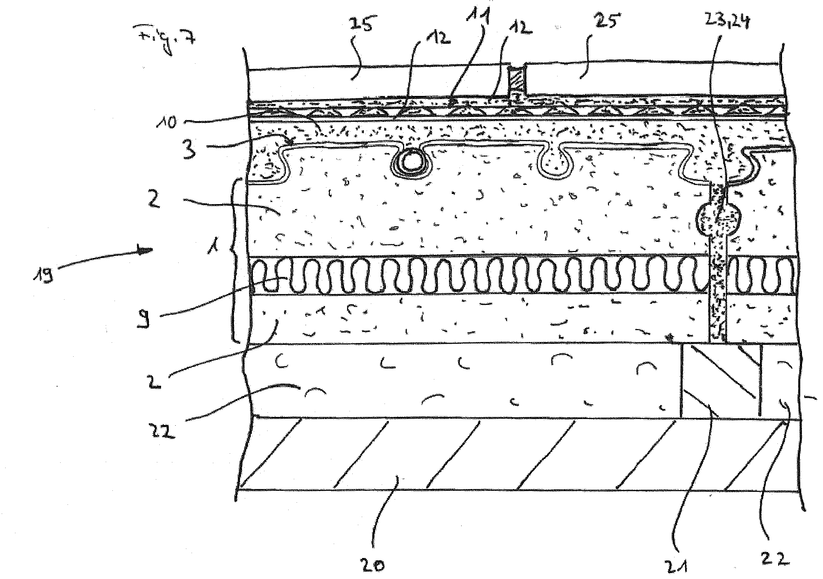

Figur 7 zeigt eine Bodenkonstruktion 19, die unter Verwendung von in Figur 2 dargestellten Fertigbauteilen 1 wie folgt hergestellt wird. Die Fertigbauteile 1 werden in einem ersten Schritt auf einem bodenseitigen Untergrund 20 derart angeordnet, dass diese auf von dem Untergrund 20 vorstehenden Fundamentstreifen 21 ruhen, wobei zwischen den Fundamentstreifen 21 vorhandene Hohlräume beispielsweise mit Schüttmaterial 22 aufgefüllt sein können. In einem weiteren Schritt werden die zwischen den Fertigbauteilen 1 und oberhalb der Fundamentstreifen 22 vorhandenen Fugen 23 mit einem geeigneten pastösen Füllmaterial 24 aufgefüllt, das auch die stirnseitig ausgebildeten Ausnehmungen 8 verfüllt, wodurch eine feste Verbindung zwischen den Fertigbauteilen erzeugt wird. Derartige Fugen 23 können aber auch als Dehnungsfugen ausgebildet werden, indem sie mit einem Füllmaterial geschlossen werden, das nach dem Aushärten elastische Eigenschaften aufweist, wie beispielsweise Silikon oder dergleichen. In einem weiteren Schritt werden Heizleiter 6 von oben zwischen die Haltevorsprünge 5 der Heizleiteraufnahmeplatten 3 eingeführt, mäanderförmig verlegt und an ein Fußbodenheizungssystem angeschlossen, woraufhin die Abdeckschicht 10 vorliegend in Form einer Estrichschicht eingebracht wird. Nach dem Aushärten der Estrichschicht werden auf dieser unter Verwendung von Dünnbettmörtel Entkopplungsmatten 10 befestigt, auf denen ebenfalls unter Verwendung von Dünnbettmörtel 12 Fliesen 25 verlegt werden.

Die in Figur 7 dargestellte Bodenkonstruktion 22 ist dahingehend von Vorteil, dass die Anordnung der Dämmschicht 9 etwa in der Mitte des Fertigbauteils 1 dazu führt, dass die obere Beton- oder Mörtelschicht 2, die zwischen der Dämmschicht 9 und der Heizleiteraufnahmeplatte 3 angeordnet ist, als Wärmespeicher für die von den Heizleitern 6 abgegebene Wärme wirkt und gegenüber der Unterseite durch die Dämmschicht 2 isoliert ist. Darüber hinaus sind die Heizleiter sehr nah an der Oberseite des Fertigbauteils 1 angeordnet, so dass Wärme insbesondere beim Anheizen die Oberseite des Fertigbauteils 1 innerhalb einer sehr kurzen Zeitdauer erreicht. Ein weiterer Vorteil besteht darin, dass das Fertigbauteil 1 aufgrund seiner wenigen Hohlräume hoch belastbar und entsprechend auch für gewichtsmäßig stark beanspruchte Bodenkonstruktionen von Gewerbegebäude sehr gut geeignet ist.

Es sollte klar sein, dass anstelle des in Figur 2 dargestellten Fertigbauteils 1 zur Herstellung der in Figur 7 gezeigten Bodenkonstruktion 19 auch Fertigbauteile 1 gemäß den Figuren 1, 3, oder 4 verwendet werden können, so dass im Falle eines Fertigbauteils 1 gemäß Figur 1 vor Ort ein Bearbeitungsschritt zur Anordnung der Dämmschicht 9 hinzukommt bzw. bei den Fertigbauteilen gemäß den Figuren 3 oder 4 vor Ort weitere Bearbeitungsschritte entfallen.

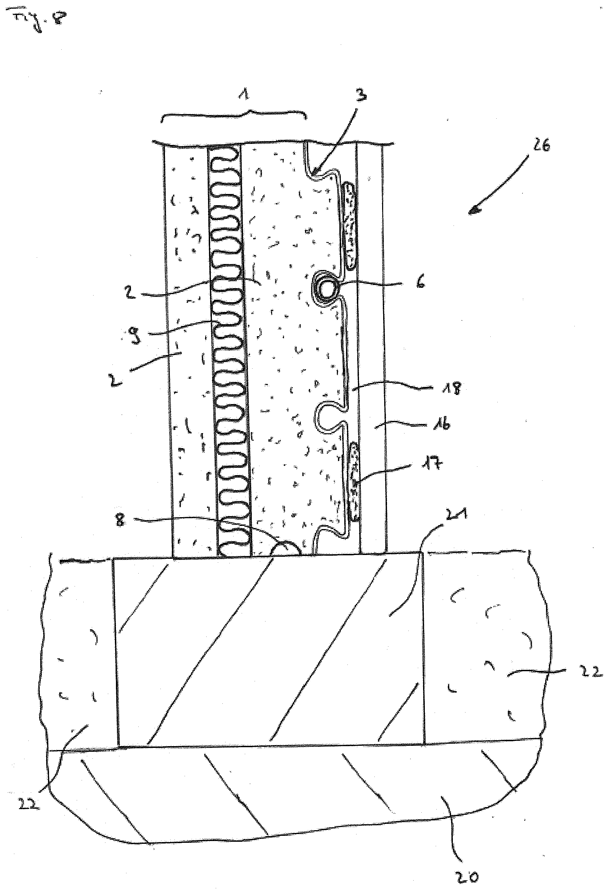

Figur 8 zeigt ein Beispiel einer Wandkonstruktion 26, die unter Verwendung von in Figur 2 dargestellten Fertigbauteilen 1 wie folgt hergestellt wird. Die Fertigbauteile 1 werden in einem ersten Schritt stirnseitig auf einem bodenseitigen Untergrund 20 derart angeordnet, dass diese auf von dem Untergrund 20 vorstehenden Fundamentstreifen 21 ruhen. In einem weiteren Schritt werden die zwischen den Fertigbauteilen 1 vorhandenen Fugen mit einem geeigneten pastösen Füllmaterial 24 aufgefüllt, das auch die stirnseitig ausgebildeten Ausnehmungen 9 verfüllt, was in Figur 8 jedoch nicht dargestellt ist. In einem weiteren Schritt werden Heizleiter 6 von oben zwischen die Haltevorsprünge 5 der Heizleiteraufnahmeplatten 3 eingeführt, mäanderförmig verlegt und an ein Wandheizungssystem angeschlossen, woraufhin die Bauplatte 16 unter Verwendung von Mörtelbatzen 17 und/oder nicht näher dargestellten Dübeln und Schrauben auf der Heizleiteraufnahmeplatte 3 angebracht wird. Zwischenräume zwischen benachbarten Bauplatten 16 können verspachtelt und dann tapeziert werden. Alternativ kann auf den Bauplatten 16 eine Putzmörtelschicht aufgetragen werden. Ebenso können auf den Bauplatten 16 Fliesen 25 verlegt werden, ggf. unter Verwendung einer Entkopplungsmatte 11. Auch vorliegend sollte klar sein, dass anstelle des in Figur 2 dargestellten Fertigbauteils 1 ein solches verwendet werden kann, wie es in den Figuren 1, 3, 4, 5 oder 6 dargestellt ist, wodurch Bearbeitungsschritte vor Ort auf der Baustelle hinzukommen oder entfallen. Analog wie zur Figur 7 beschrieben bildet hier die dem Raum zugewandte Beton- oder Mörtelschicht 2 einen Wärmespeicher, wobei die etwa in der Mitte des Fertigbauteils 1 angeordnete Dämmschicht 9 vor Temperatureinflüssen der Au-ßenluft schützt.

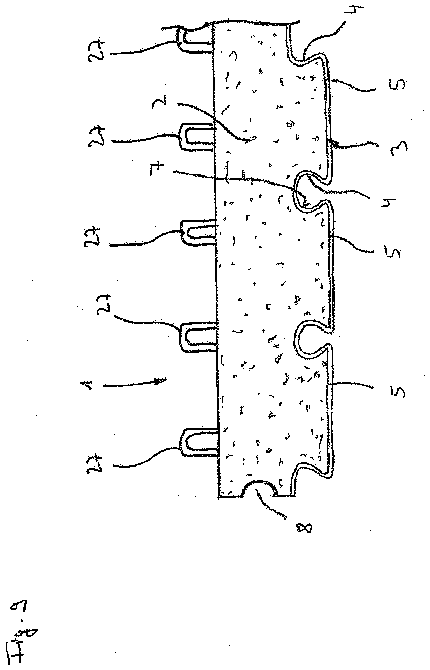

Figur 9 zeigt ein Fertigbauteil 1 gemäß einer siebten Ausführungsform der vorliegenden Erfindung, das insbesondere als Rohbaukörper zur Erzeugung einer Gebäudedecke geeignet ist. Das Fertigbauteil 1 entspricht im Wesentlichen dem in Figur 1 dargestellten Fertigbauteil 1 gemäß der ersten Ausführungsform. Ein Unterschied besteht darin, dass aus der Beton- oder Mörtelschicht 2 Bewehrungselemente 27 in Richtung der der Heizleiteraufnahmeplatte 3 abgewandten Seite des Fertigbauteils 1 ragen. Diese Bewehrungselemente 27 dienen dazu, eine nach dem Einsetzen des Fertigbauteils 1 auf diesem aufzubringende weitere Materialschicht zu bewehren, insbesondere eine weitere Beton- oder Mörtelschicht.

Es sei darauf hingewiesen, dass die zuvor beschriebenen Ausführungsformen nicht als einschränkend zu betrachten sind. Vielmehr sind Modifikationen und Änderungen der Ausführungsformen im Umfang des Schutzbereiches der vorliegenden Erfindung möglich, der durch die beiliegenden Ansprüche definiert ist.

### BEZUGSZEICHENLISTE

- 1: Fertigbauteil
- 2: Beton- oder Mörtelschicht
- 3: Heizleiteraufnahmeplatte
- 4: Hinterschneidung
- 5: Haltevorsprung
- 6: Heizleiter
- 7: Seitenwand
- 8: Ausnehmung
- 9: Dämmschicht
- 10: Abdeckschicht
- 11: Entkopplungsmatte
- 12: Dünnbettmörtel
- 13: Vertiefung
- 14: Vlies
- 15: Hohlraum
- 16: Bauplatte
- 17: Mörtelbatzen
- 18: Luftraum
- 19: Bodenkonstruktion
- 20: Untergrund
- 21: Fundamentstreifen
- 22: Schüttmaterial
- 23: Fuge
- 24: Füllmaterial
- 25: Fliese
- 26: Wandkonstruktion
- 27: Bewehrungselement

## Patentansprüche

1. Plattenförmiges Fertigbauteil (1) mit zumindest einer ersten selbsttragenden Beton- oder Mörtelschicht (2), **dadurch gekennzeichnet, dass** mit der Oberseite der ersten Beton- oder Mörtelschicht (2) eine Heizleiteraufnahmeplatte (3) aus Kunststoff formschlüssig verbunden ist, die mit einer regelmäßigen Strukturierung versehen ist und eine im Wesentlichen einheitliche Materialstärke aufweist, wobei die Strukturierung aufwärts weisende, mit Hinterschneidungen (4) versehene Haltevorsprünge (5) umfasst, die zur klemmenden Aufnahme von Heizleitern (6) ausgelegt sind.

2. Fertigbauteil (1) nach Anspruch 1, **dadurch gekennzeichnet, dass** die Haltevorsprünge (5) in einem Abstand zueinander angeordnet sind, der zur Aufnahme von Heizleitern (6) in Form von Rohren und/oder Schläuchen mit einem Außendurchmesser im Bereich von 10 bis 25 mm ausgelegt ist, wobei die Seitenwände (7) der Haltevorsprünge (5) bevorzugt kreisbogenförmige Rundungen aufweisen.

3. Fertigbauteil (1) nach Anspruch 1 oder 2, **dadurch gekennzeichnet, dass** die Haltevorsprünge (5) in einem Abstand zueinander angeordnet sind, der zur Aufnahme von Heizleitern (6) in Form von Heizkabeln mit einem Außendurchmesser im Bereich von 4 bis 10 mm ausgelegt ist, wobei die Seitenwände der Vorsprünge bevorzugt kreisbogenförmige Rundungen aufweisen.

4. Fertigbauteil (1) nach einem der vorhergehenden Ansprüche, **dadurch gekennzeichnet, dass** dieses eine zweite selbsttragende Beton- oder Mörtelschicht (2) und eine Dämmschicht (9) aufweist, wobei die Dämmschicht (9) zwischen der ersten Beton- oder Mörtelschicht (2) und der zweiten Beton- oder Mörtelschicht (2) angeordnet ist.

5. Fertigbauteil (1) nach einem der vorhergehenden Ansprüche, **dadurch gekennzeichnet, dass** die Rohdichte der Beton- oder Mörtelschicht (2) oder der Beton- oder Mörtelschichten (2) mindestens 1800 kg/m³ beträgt, besser noch 2300 kg/m³.

6. Fertigbauteil (1) nach einem der vorhergehenden Ansprüche, **dadurch gekennzeichnet, dass** stirnseitig zumindest eine Ausnehmung (8) vorgesehen ist, insbesondere in Form einer Nut, besser noch in Form einer umlaufenden Nut.

7. Fertigbauteil (1) nach einem der vorhergehenden Ansprüche, **dadurch gekennzeichnet, dass** an der Oberseite der Heizleiteraufnahmeplatte (3) zumindest ein Heizleiter (6) aufgenommen ist, der Anschlüsse aufweist, die von einer oder mehreren Stirnseiten des Fertigbauteils (1) aus zugänglich sind, und dass an Oberseite eine den zumindest einen Heizleiter (6) bedeckende Abdeckschicht (10) in Form einer Estrichschicht, Putzmörtelschicht oder von Bauplatten (16), insbesondere Gipskartonplatten vorgesehen ist.

8. Fertigbauteil (1) nach Anspruch 7, **dadurch gekennzeichnet, dass** an der Abdeckschicht (10) oder an der Bauplatte (16) eine Entkopplungsmatte (11) befestigt ist, insbesondere unter Verwendung eines Dünnbettmörtels (12).

9. Verfahren zum Herstellen einer Bodenkonstruktion (19) unter Verwendung von Fertigbauteilen (1) nach einem der vorhergehenden Ansprüche, das die Schritte aufweist:
a) Anordnen der Fertigbauteile (1) auf einem bodenseitigen Untergrund (20) derart, dass diese auf von dem Untergrund (20) vorstehenden Fundamentstreifen (21) ruhen, wobei zwischen den Fundamentstreifen (21) vorhandene Hohlräume aufgefüllt werden können, insbesondere mit einem Schüttmaterial (22),
b) Ausfüllen der zwischen den Fertigbauteilen (1) vorhandenen Fugen (26) mit einem geeigneten Füllmaterial (24) und
c) Verlegen eines Bodenbelags auf der Oberseite der Fertigbauteile (1).

10. Verfahren nach Anspruch 8 unter Verwendung von Fertigbauteilen (1) nach einem der Ansprüche 1 bis 8, **dadurch gekennzeichnet, dass** zwischen den Schritten b) und c) Heizleiter (6) auf der Heizleiteraufnahmeplatte (3) verlegt, auf der Heizleiteraufnahmeplatte (3) eine die Heizleiter (6) bedeckende Estrichschicht angeordnet und optional auf der Estrichschicht eine Entkopplungsmatte (11) befestigt wird, insbesondere unter Verwendung eines Dünnbettmörtels (12).

11. Verfahren zum Herstellen einer Wandkonstruktion eines Gebäudes unter Verwendung von Fertigbauteilen (1) nach einem der Ansprüche 1 bis 8, das die Schritte aufweist:
a) Anordnen der Stirnseiten der Fertigbauteile (1) auf einem bodenseitigen Untergrund (20) derart, dass diese auf von dem Untergrund (20) vorstehenden Fundamentstreifen (21) ruhen und die Oberseiten der jeweiligen Heizleiteraufnahmeplatten (3) zum Innern eines Raumes des Gebäudes weisen,
b) Ausfüllen der zwischen den Fertigbauteilen (1) vorhandenen Fugen (23) mit einem geeigneten Füllmaterial (24) und
c) Anordnen einer Wandverkleidung auf den Fertigbauteilen (1).

12. Verfahren nach Anspruch 11 unter Verwendung von Fertigbauteilen (1) nach einem der Ansprüche 1 bis 8, **dadurch gekennzeichnet, dass** zwischen den Schritten b) und c) Heizleiter (6) auf der Heizleiteraufnahmeplatte (3) verlegt, auf der Heizleiteraufnahmeplatte (3) eine die Heizleiter (6) bedeckende Abdeckschicht (10) in Form von Putzmörtel oder von Bauplatten (16), insbesondere Gipskartonplatten angeordnet und optional auf der Abdeckschicht (10) eine Entkopplungsmatte (11) befestigt wird, insbesondere unter Verwendung eines Dünnbettmörtels (12).

13. Verfahren zum Herstellen einer Deckenkonstruktion eines Gebäudes unter Verwendung von Fertigbauteilen (1) nach einem der Ansprüche 1 bis 8, das die Schritte aufweist:
a) Anordnen der Fertigbauteile (1) derart, dass diese zum Innern eines Raumes des Gebäudes weisen,
b) Ausfüllen der zwischen den Fertigbauteilen (1) vorhandenen Fugen (23) mit einem geeigneten Füllmaterial (24) und
c) Anordnen einer Deckenverkleidung auf den Fertigbauteilen (1).

14. Verfahren nach Anspruch 13 unter Verwendung von Fertigbauteilen (1) nach einem der Ansprüche 1 bis 8, **dadurch gekennzeichnet, dass** zwischen den Schritten b) und c) Heizleiter (6) auf der Heizleiteraufnahmeplatte (3) verlegt, auf der Heizleiteraufnahmeplatte (3) eine die Heizleiter (6) bedeckende Abdeckschicht (10) in Form von Putzmörtel oder von Bauplatten (16), insbesondere Gipskartonplatten angeordnet und optional auf der Abdeckschicht (10) eine Entkopplungsmatte (11) befestigt wird, insbesondere unter Verwendung eines Dünnbettmörtels (12).
